# EUROPÄISCHE PATENTANMELDUNG

(11) **EP 1 882 620 A1**
(43) Veröffentlichungstag der Anmeldung: **30.01.2008**
(21) Anmeldenummer: 07112934.0
(22) Anmeldetag: 23.07.2007
(51) Int. Cl.: B61L 25/02, G01C 22/02

(54) **Verfahren zur Bestimmung des Fahrwegs und der Geschwindigkeit eines Fahrzeugs, insbesondere für sicherheitskritische Zugbeeinflussungssysteme**

(30) Priorität: 27.07.2006 DE 102006035597
(71) Anmelder: SIEMENS AKTIENGESELLSCHAFT, 80333 München (DE)
(72) Erfinder: Kendelbacher, Detlef, 13129, Berlin (DE); Pliquett, Volker, 12621, Berlin-Kaulsdorf (DE); Stein, Fabrice, 12621, Berlin (DE)

(57) **Zusammenfassung**

Die Erfindung betrifft ein Verfahren zur Bestimmung des Fahrwegs eines Fahrzeugs, insbesondere für sicherheitskritische Zugbeeinflussungssysteme, mit einer im Fahrzeug angeordneten ersten Ortungseinrichtung (1), durch welche der Fahrweg (~ΔsB) des Fahrzeugs erfasst wird, insbesondere mittels Wegimpulsgeber (BA) über den Raddurchmesser des Fahrzeugs und/oder Doppler-Radar (BB, Bn). Um sowohl eine hohe Sicherheit als auch eine hohe Genauigkeit in Bezug auf die Ortung zu erzielen, wird vorgeschlagen, im Fahrzeug eine zweite Ortungseinrichtung (2) zu nutzen, welche Signale eines satellitengestützten Navigationssystems empfängt, den jeweils aktuellen Ort (POSGPS) des Fahrzeugs ermittelt und anhand der ermittelten Orte (POSGPS) den Fahrweg (ΔsGPS) bestimmt, dass jeweils der mittels der zweiten Ortungseinrichtung (2) bestimmte Fahrweg (ΔsGPS) mit dem Fahrweg (ΔsB) der ersten Ortungseinrichtung (1) ins Verhältnis gesetzt und als Ergebnis ein Verhältniswert (kBΔt) gebildet wird, dass mehrere dieser zeitlich hintereinander liegenden Verhältniswerte (kBΔt) gemittelt werden und dass der von der ersten Ortungseinrichtung (1) ermittelte Fahrweg (ΔsB) jeweils zur Kalibrierung mit dem zuletzt ermittelten Mittelwert (kB) als Kalibrierfaktor multipliziert wird. Das Verfahren lässt sich mit geringen Anpassungen auch zur Bestimmung der Geschwindigkeit des Fahrzeugs verwenden.

## Beschreibung

Die Erfindung betrifft ein Verfahren zur Bestimmung des Fahrwegs und der Geschwindigkeit eines Fahrzeugs, insbesondere für sicherheitskritische Zugbeeinflussungssysteme, gemäß dem Oberbegriff des Anspruchs 1.

Verfahren zur Bestimmung des Fahrwegs und der Geschwindigkeit von sich innerhalb eines Streckennetzes bewegenden Fahrzeugen sind bekannt. Zur Durchführung der sicherheitskritischen Zugbeeinflussung ist es erforderlich, den jeweiligen Ort und die Geschwindigkeit der Fahrzeuge genau zu bestimmen. Zu diesem Zweck befinden sich in den Fahrzeugen Ortungseinrichtungen, welche aus geschwindigkeitsproportionalen Sensordaten die aktuelle Fahrzeuggeschwindigkeit und den jeweils zurückgelegten Fahrweg ermitteln. Die Ortungseinrichtungen arbeiten mit Wegimpulsgebern als Odometrie-Sensoren, welche anhand des Raddurchmessers und der erfolgten Radumdrehungen die Fahrzeuggeschwindigkeit ermitteln. Ebenso können die Ortungseinrichtungen über ein Doppler-Radar zur Geschwindigkeitsmessung verfügen. Für Applikationen mit geringeren Anforderungen an die Sicherheit und die Genauigkeit ist es meist ausreichend, bei der Ortung auf die Ergebnisse einer einzigen Ortungseinrichtung zu bauen. Für hohe Sicherheits- und Genauigkeitsanforderungen werden für die Gewinnung der Ortungsdaten mehrere unabhängig voneinander arbeitende Odometrie-Sensoren eingesetzt, deren Ergebnisse auf Plausibilität überprüft und miteinander verknüpft werden.

Die im Bahnbereich eingesetzten Odometrie-Sensoren, Wegimpulsgeber und Doppler-Radar, weisen einen relativ großen systematischen Messfehler auf. Um den systematischen Messfehler zu reduzieren, müssen diese Sensoren für jedes Fahrzeug individuell kalibriert werden. Zur Zugbeeinflussung werden mindestens zwei Odometrie-Sensoren miteinander verknüpft (fusioniert), indem die Messwerte plausibilisiert und gemittelt werden, wobei sich die Messtoleranzen der Odometrie-Sensoren zu einem sicherheitsrelevanten Vertrauensintervall addieren.

Dabei ist die Genauigkeit und Verfügbarkeit der eingesetzten Sensormesswerte abhängig von Betriebs- und Umweltsituationen. So liefert das Doppler-Radar systembedingt bei Stillstand keine gültigen Messwerte. Die Messfehler können sich auch durch reflektionsarme Untergründe (Schnee, Wasser) erhöhen. Der Wegimpulsgeber wiederum zählt die Drehimpulse an einer Fahrzeugachse. Ist er an einer angetriebenen oder gebremsten Fahrzeugachse montiert, kann das Messergebnis durch den beim Beschleunigen und Bremsen auftretenden Schlupf verfälscht werden.

Somit können durch Messfehler und Ausfälle von Odometrie-Sensoren die Ziele der Ortung nicht immer erreicht werden, d.h. durch Messdaten mit hohem Fehleranteil und dem Ausfall von Odometrie-Sensoren müssen die Vertrauensintervalle der Ergebnisse vergrößert werden, so dass es vorkommen kann, dass die erforderliche Ortungsgenauigkeit nicht erreicht wird. Dies kann sogar so weit führen, dass die Fahrzeugortung komplett ausfällt, was bei einem Bahnsystem bedeutet, dass es zu erheblichen Zugverspätungen kommt.

Weiter sind Ortungseinrichtungen bekannt, deren Odometrie-Sensor-Empfänger Signale eines satellitengestützten Navigationssystems empfängt und daraus den jeweils aktuellen Ort ermittelt. Derartige Ortungseinrichtungen sind beispielsweise als GPS bekannt. Satellitengestützte Odometrie-Sensoren wie GPS werden derzeit allerdings nicht in sicherheitskritischen Systemen zur Zugsteuerung eingesetzt. GPS-Sensoren weisen systembedingt eine relativ hohe stochastische Schwankung des ermittelten Orts bzw. der ermittelten Geschwindigkeit und einen geringen systematischen Messfehler auf.

Die Aufgabe der Erfindung ist es, ein Verfahren vorzuschlagen, das sowohl eine hohe Sicherheit als auch eine hohe Genauigkeit in Bezug auf die Ortung aufweist.

Die Erfindung wird durch die Merkmale des Anspruchs 1 gelöst; die Unteransprüche entsprechen vorteilhaften Ausgestaltungen.

Die Lösung sieht im Fahrzeug eine zweite Ortungseinrichtung vor, welche Signale eines satellitengestützten Navigationssystems empfängt. Die zweite Ortungseinrichtung kann aus einem oder mehreren satellitengestützten Empfängern bestehen. Aus den Messdaten der zweiten Ortungseinrichtung wird der innerhalb eines festgelegten Zeitintervalls gefahrene Fahrweg oder die gefahrene Durchschnittsgeschwindigkeit bestimmt. Die Messdaten der ersten Ortungseinrichtung werden so aufbereitet, dass weg- oder geschwindigkeitsproportionale Messwerte innerhalb des gleichen festgelegten Zeitintervalls gebildet werden. Die Aufbereitung kann verschiedene Vorverarbeitungsschritte nach dem Stand der Technik, wie beispielsweise Linearisierung, Differentialbildung, Integration, Summation, Filterung und Interpolation innerhalb der Intervallgrenzen umfassen. Liegen im gemeinsamen Messzyklus Ergebnisse der ersten und zweiten Ortungseinrichtung vor, wird ein Verhältniswert von Fahrweg oder Geschwindigkeit der zweiten Ortungseinrichtung zu weg- oder geschwindigkeitsproportionalem Messwert der ersten Ortungseinrichtung gebildet. Durch zyklisches Wiederholen der Messungen entstehen laufend neue Verhältniswerte zwischen zweiter und erster Ortungseinrichtung.

Für jeden Sensor der ersten Ortungseinrichtung können spezifische Klassen für die Zuordnung von Verhältniswerten definiert werden. Die Kriterien für die Klasseneinteilung hängen vom jeweiligen Sensor der ersten Ortungseinrichtung ab. Beispielsweise kann ein Sensor verschiedene Betriebsmodi aufweisen, in denen er Daten mit unterschiedlicher Qualität ausgibt. Für jeden dieser Betriebsmodi kann eine separate Klasse eingeführt werden. Jeder Verhältniswert wird dann immer der Klasse zugeteilt, die dem aktuellen Betriebsmodus des Sensors entspricht. Aus der Anzahl der verfügbaren sensorspezifischen Verhältniswerte je Klasse werden in jedem Messzyklus Mittelwert und Varianz berechnet.

Die jeweils aktuell berechneten Mittelwerte aller Klassen eines Sensors der ersten Ortungseinrichtung dienen als Kalibrierfaktoren für die Messwerte des zugrunde liegenden Sensors der ersten Ortungseinrichtung. Die Auswahl eines Mittelwertes aus den verfügbaren Mittelwerten aller Klassen erfolgt anhand von weiteren Systemzustandskriterien, wie beispielsweise dem aktuellen Betriebsmodus des Sensors, der Temperatur oder der aktuellen Geschwindigkeit.

Im einfachsten Fall gibt es für jeden Sensor der ersten Ortungseinrichtung genau eine Klasse und damit einen aktuellen Mittelwert für die Kalibrierung.

Zur Kalibrierung eines Sensors der ersten Ortungseinrichtung werden dessen weg- oder geschwindigkeitsproportionale Messwerte mit dem jeweils aktuellen Mittelwert der anzuwendenden Klasse multipliziert.

Die Varianz der Verhältniswerte ist ein Indikator für die Streuung der kalibrierten Messergebnisse. Aus der Größe der Streuung kann die Konvergenz des Kalibrierverfahrens beurteilt werden. Weiterhin kann die erreichte Genauigkeit der Ortung beurteilt werden. Unter Annahme einer Gleichverteilung der stochastischen Fehler kann aus der Varianz auf die aktuelle Verteilungsfunktion der Messergebnisse geschlossen werden. Anhand der Verteilungsfunktion können Intervallgrenzen um den kalibrierten Messwert angegeben werden, innerhalb derer der wahre Fahrweg oder die wahre Geschwindigkeit mit einer geforderten Wahrscheinlichkeit liegt. Daneben können aus der Varianz Kumulanten höherer Ordnung gebildet werden, die als Indikatoren und Prüfkriterien für die korrekte Sensor- und Verfahrensfunktion genutzt werden können.

Bei dem Verfahren wird die Kalibrierung der eingebundenen Sensoren der ersten Ortungseinrichtung mit Hilfe eines oder mehrerer Sensoren der zweiten Ortungseinrichtung zyklisch (kontinuierlich mit einem festgelegten verfahrenseigenen Messzyklus Δt) durchgeführt, wobei sensor- und klassenspezifische Mittelwerte für die Kalibrierung bestimmt werden. Durch zyklische Wiederholung der Messung und Mittelwertbildung verringert sich der Einfluss des stochastischen Messfehlers der zweiten Ortungseinrichtung mit zunehmender Zahl an Einzelmessungen. Die ermittelten Mittelwerte für die Kalibrierung werden also im Laufe der Zeit zunehmend genauer. Mit der Kalibrierung wird der relativ große systematische Fehler der Sensoren der ersten Ortungseinrichtung beseitigt. Gleichzeitig wird die Varianz der Verhältniswerte auf den kalibrierten Messwert der Sensoren übertragen. Je länger das Verfahren arbeitet, desto geringer wird der Anteil des stochastischen Fehlers am Ergebnis der Messung, d. h. umso größer wird die Genauigkeit der Messung und umso kleiner werden die Vertrauensintervalle. Es kommt hier also zu einer fortlaufenden Minimierung des stochastischen Fehlers, wobei die Kalibrierfaktoren gleichsam nachgeführt und auch langsam veränderliche systematische Fehler (Drift) der Sensoren kompensiert werden.

Eine Verbesserung in Bezug auf die Sicherheit als auch in Bezug auf die Genauigkeit erhält man, wenn die erste und/oder zweite Ortungseinrichtung mehrere Sensoren umfasst, insbesondere Wegimpulsgeber und Doppler-Radar der ersten Ortungseinrichtung, die jeweils die Daten für den Weg oder die Geschwindigkeit des Fahrzeugs unabhängig voneinander erfassen, dass jeweils jeder Fahrweg/jede Geschwindigkeit der zweiten Ortungseinrichtung mit den weg- oder geschwindigkeitsproportionalen Messwerten der ersten Ortungseinrichtung ins Verhältnis gesetzt, als Ergebnis je ein klassenspezifischer Verhältniswert gebildet und durch Mittelung von zeitlich hintereinander liegenden Verhältniswerten einer Klasse je ein sensorspezifischer Mittelwert für die Kalibrierung gebildet wird, dass die von den Sensoren der ersten Einrichtung ermittelten weg- oder geschwindigkeitsproportionalen Messwerte jeweils mit dem zuletzt ermittelten Mittelwert der anzuwendenden Klasse multipliziert werden und dass ein gewichtetes Mittel aus den kalibrierten Fahrwegen und/oder Geschwindigkeiten mehrerer Sensoren der ersten Ortungseinrichtung gebildet wird (Fusion), wobei die Gewichtsfaktoren aus den Varianzen der verwendeten Verhältniswerte abgeleitet werden. Die Gewichtsfaktoren können beispielsweise indirekt proportional zur Varianz der Verhältniswerte gewählt werden.
Neben der gewichteten Fusion der kalibrierten Messwerte erfolgt auch die Fusion der Varianzen der sensorspezifisch verwendeten Verhältniswerte. Sie kann beispielsweise durch Faltung der aus den Varianzen abgeleiteten Wahrscheinlichkeitsdichtefunktionen erfolgen. Die Fusion der Varianzen führt zu einer resultierenden Varianz, welche die Streuung des fusionierten Messergebnisses darstellt. Anhand der fusionierten Varianz können sicherheitsrelevante Vertrauensintervalle für Fahrweg und Geschwindigkeit gebildet werden. Durch Ableitung von Kumulanten höherer Ordnung aus der fusionierten Varianz sind Plausibilisierungskriterien zur Beurteilung der korrekten Sensor- und Verfahrensfunktion verfügbar. Weiterhin können die Genauigkeit der Messung und die Konvergenz des Verfahrens mit mehreren Sensoren der ersten Ortungseinrichtung beurteilt werden.

Eine weitere Verbesserung des Verfahrens kann dadurch erreicht werden, dass für jeden Verhältniswert der Messwerte zwischen zweiter und erster Ortungseinrichtung eine Gültigkeitsdauer vorgegeben ist. Verhältniswerte, deren Gültigkeitsdauer überschritten ist, werden für die Berechnung des aktuellen Kalibrierfaktors nicht mehr herangezogen. Mit dieser Alterung wird eine einfache Nachführung der Kalibrierung bei Drift eines Sensors der ersten Ortungseinrichtung erreicht. Weiterhin erfolgt bei längeren Zeitabschnitten ohne neue Verhältniswerte (beispielsweise aufgrund von Datenmangel in Tunnels) durch Reduktion der Stützwerte für die Mittelwertberechnung eine Vergrößerung der Varianz und damit der Messunsicherheit, was dem Verhalten sicherheitskritischer Systeme angemessen ist.

Die Ermittlung der spezifischen Mittelwerte für die Sensoren der ersten Ortungseinrichtung kann auf der Grundlage des Vergleichs von Fahrwegen oder Geschwindigkeiten erfolgen. Im Falle des Vergleichs von Fahrwegen werden die Fahrwege der zweiten Ortungseinrichtung durch Bildung der Wegdifferenzen jeweils zweier aufeinander folgender Messwerte bestimmt. Die Wegdifferenz stellt bei kurzem zeitlichem Abstand zweier Messwerte annähernd den Verlauf der Fahrzeugbewegung dar. Für die Messwerte der Sensoren der zweiten Ortungseinrichtung wird zur Abstandsberechnung keine topologische Karte benötigt, da der Abstand der Messwerte direkt aus der Differenz der Weg-Koordinaten ableitbar ist. Vorteilhaft ist es in diesem Fall, mehrere Wegdifferenzen in kurzem zeitlichem Abstand aus mehreren aufeinander folgenden Messwerten zu ermitteln und in den Messzyklus aufzunehmen. Die Fahrzeugbewegung wird im Messzyklus in diesem Fall durch einen Polygonzug nachgebildet. Dadurch können einerseits der Abbildungsfehler der Fahrzeugbewegung und andererseits der stochastische Messfehler innerhalb des Messzyklus reduziert werden.

Im Falle des Vergleichs von Geschwindigkeiten ist es vorteilhaft, die Durchschnittsgeschwindigkeiten der Sensoren der ersten und zweiten Ortungseinrichtung innerhalb des Messzyklus zu ermitteln und ins Verhältnis zu setzen. Die Durchschnittsgeschwindigkeit kann dabei sowohl aus den Geschwindigkeitsmesswerten direkt abgeleitet werden, als auch durch Differentiation der gefahrenen Wege erfolgen.

Unabhängig davon, ob die Mittelwertbildung auf der Grundlage des Vergleichs von Geschwindigkeiten oder Fahrwegen basiert können damit sowohl weg- als auch geschwindigkeitsproportionale Messwerte eines Sensors der ersten Ortungseinrichtung kalibriert werden. Die Kalibrierung der Messwerte ist unabhängig von der Zyklusdauer der Mittelwertbestimmung und erfolgt mit dem individuellen Abtastzyklus des jeweiligen Sensors der ersten Ortungseinrichtung.

Insbesondere für sicherheitskritische Zugbeeinflussungssysteme wird vorgeschlagen, dass aus den einzelnen Varianzen der Verhältniswerte eine resultierende Varianz als Maß für die Streuung um den gemittelten Fahrweg/die gemittelte Geschwindigkeit und/oder als Hilfsgröße zur Bestimmung des Vertrauensintervalls des gemittelten Fahrwegs/der gemittelten Geschwindigkeit gebildet wird.

Die Sicherheit und Genauigkeit erhöhen sich, wenn Plausibilitätsprüfungen vorgesehen sind, wobei bei Vorliegen einer Nichtplausibilität in einer Zyklusdauer kein neuer Verhältniswert gebildet wird.

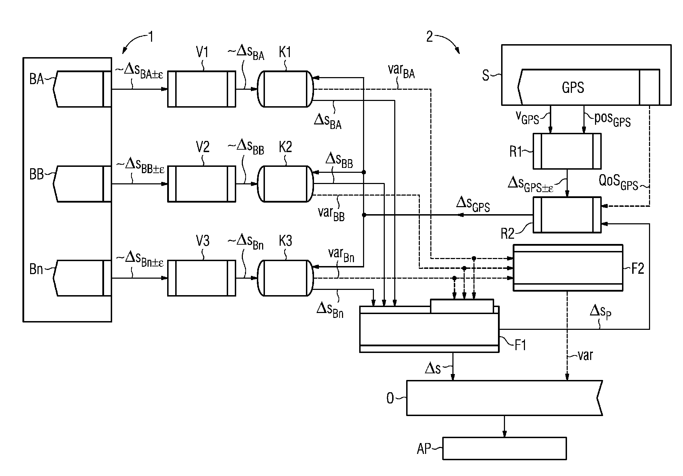

Die Erfindung wird nachfolgend anhand einer Zeichnung näher beschrieben. Die einzige Figur zeigt ein Verfahren zur Bestimmung des Fahrwegs eines Fahrzeugs für ein Zugbeeinflussungssystem einer Bahnanlage, welches ein dynamisches Kalibrierverfahren für mehrere Sensoren einer ersten Ortungseinrichtung (als B-Sensoren oder Sensoren B bezeichnet) umfasst und so hohen Sicherheitsanforderungen an den ermittelten Fahrweg genügt.

Die Figur zeigt zunächst eine zweite Ortungseinrichtung 2, die zunächst beschrieben wird, mit einem Signal eines satellitengestützten Navigationssystems empfangenden GPS-Empfänger als Stützsensor (kurz: S-Sensor bzw. Sensor S). Der S-Sensor gibt den Ort des Fahrzeugs zyklisch (Zykluszeit oder Abtastzyklus ΔtGPS) als Ortungsdaten POSGPS in Längen- und Breitengraden aus, und zwar sowohl während der Bewegung des Fahrzeugs, als auch im Stillstand. Der Abtastzyklus ΔtGPS wird so gewählt (ca. 1 s), dass der Fehler zwischen der realen (gekrümmten) Fahrzeugbewegung und dem zyklisch (aus dem Abstand zweier Ortungsdaten POSGPS) ermittelten Fahrweg vernachlässigt werden kann, also sehr klein ist. Weiter liefert der S-Sensor zyklisch ein DOP-Signal als eine spezielle Information QoSGPS über die aktuelle Qualität des Signals des Navigationssystems.

Die Ortungsdaten POSGPS des S-Sensors werden anschließend von einer Generatorstufe R1 aufbereitet, die mit der Periode des Abtastzyklus ΔtGPS das zugehörige Wegintervall ΔPOSGPS durch Differenzbildung der aufeinander folgenden Ortungsdaten POSGPS ermittelt. Nach einer entsprechenden Anzahl von Wegintervallen ΔPOSGPS berechnet die Generatorstufe R1 für eine vorgegebene Zyklusdauer Δt (ca. 30 s) jeweils das gefahrene Fahrwegstück ΔsGPS, wobei Δt die Zeitkonstante ist, mit der das weiter unten beschriebene dynamische Kalibrierverfahren arbeitet. Die Berechnung erfolgt durch Aufsummierung aller innerhalb der Zyklusdauer Δt liegenden Wegintervalle ΔPOSGPS. Bei Bedarf erfolgt eine Interpolation des Fahrwegstücks ΔsGPS am Beginn und Ende von Δt. Die ermittelten Fahrwegstücke ΔsGPS entsprechen anschaulich einem Polygonzug von Wegintervallen ΔPOSGPS, der die Fahrzeugbewegung nachbildet. Mit Vergrößerung der Anzahl der in der Zyklusdauer Δt liegenden Wegintervalle ΔPOSGPS verringert sich der stochastische Messfehler eines Fahrwegstücks ΔsGPS, da sich die stochastischen Messfehler der Einzelmessungen durch die Aufsummierung reduzieren.

Alternativ kann auch eine Integration der Geschwindigkeitswerte vGPS zur Ermittlung der Fahrwegstücke ΔsGPS herangezogen werden. Möglich ist auch eine Kombination beider Verfahren, beispielsweise zur Optimierung der Rechenperformance und Reduktion des systematischen Messfehlers.

Das Ergebnis der Generierung sind Fahrwegstücke ΔsGPS±ε, wobei ε der Messfehler ist, der z.B. durch mangelhafte Signalqualität des GPS-Empfängers hervorgerufen wird.

An die Generatorstufe R1 schließt sich eine Plausibilisierungsstufe R2 an, um den Messfehler ε des S-Sensors zu offenbaren und zu berücksichtigen. Die Plausibilisierung ist sicherheitsrelevant, da die Daten der B-Sensoren mit den Daten des S-Sensors skaliert werden. Deswegen sind mehrerer Schritte und Methoden zur Prüfung der korrekten GPS-Funktion vorgesehen:
1. Die Daten (Fahrwegstücke) des S-Sensors ΔsGPS±ε werden auf Lücken und Fahrtrichtungswechsel geprüft. Enthält ΔsGPS±ε Zeitabschnitte, in denen kein Signal empfangen wird (z. B. in Tunnels) oder Messwerte mit Fahrtrichtungsumkehr, werden die Daten verworfen.
2. Der dynamische Verlauf der Daten ΔsGPS±ε wird mit der maximal möglichen Fahrzeugdynamik (Beschleunigen, Bremsen) verglichen. Übersteigt der Verlauf von ΔsGPS±ε die maximale Fahrzeugdynamik, werden die Daten verworfen.
3. Zur Plausibilisierung von ΔsGPS±ε werden Hilfsinformationen QoSGPS des S-Sensors genutzt, insbesondere um dessen aktuelle Güte zu beurteilen. Sofern die signalisierte Güte des S-Sensors innerhalb der Dauer Δt einen festgelegten Grenzwert unterschreitet, wird das Fahrwegstück ΔsGPS±ε für die weitere Verarbeitung nicht verwendet. Die in kritischen Systemzuständen des Sensors S (z.B. Neuaufnahme eines Satelliten) empfangenen Messwerte werden ebenfalls verworfen. Zeitabschnitte, in denen die Signalqualität zu schlecht oder wechselhaft ist, werden nicht in die weitere Auswertung einbezogen.
4. Es erfolgt eine Plausibilisierung mit dem Ergebnis der Sensorfusion ΔsP, sofern der Wert für ΔsP verfügbar ist. ΔsP stellt den aktuell berechneten Fahrweg nach der Fusion dar und wird von der Fusionsstufe F1 nur dann gebildet und ausgegeben, wenn die Varianz mindestens eines B-Sensors einen festgelegten Grenzwert unterschreitet, d. h. wenn das Kalibrierverfahren eine Mindestgenauigkeit erreicht hat. Die Fahrwege ΔsP werden über der Zyklusdauer Δt aufsummiert und mit dem Fahrweg ΔsGPS±ε verglichen. Sofern die Fahrwege um einen festgelegten relativen Betrag voneinander abweichen, wird der Fahrweg ΔsGPS±ε für die weitere Verarbeitung nicht verwendet. Damit stellt ΔsP ein grobes Prüfkriterium dar, um große Abweichungen der satellitengestützten Wegmessung unabhängig von der signalisierten Dienstgüte des Sensors S zu offenbaren.
5. Weitere Möglichkeiten zur Plausibilisierung und Fehleroffenbarung bestehen in der Nutzung zweier diversitärer GPS-Empfänger, deren Messwerte kontinuierlich miteinander verglichen werden. In diesem Fall wird ΔsGPS±ε bei Überschreitung festgelegter Differenzen zwischen den Empfängern verworfen.
6. Mit der Bildung und Analyse von Kumulanten höherer Ordnung der Signale des S-Sensors können bei Fahrzeugstillstand weitere zusätzliche Kriterien für die Prüfung und Fehleroffenbarung des S-Sensors realisiert werden. Es können die Kumulanten 2. Ordnung (Varianzkumulante), 3. Ordnung (Symmetriekumulante) und 4. Ordnung (Grad der Abweichung zur Gaußverteilung) für die Datenanalyse des S-Sensors gebildet werden. Bei Überschreitung von jeweils kumulantenspezifisch festzulegenden Grenzwerten erfolgt die Rücksetzung aller Kalibrierfaktoren der B-Sensoren, die durch den jeweiligen S-Sensor gestützt werden. Werden Grenzwerte mehrfach überschritten, kann nach einer festzulegenden Anzahl von Grenzwertverletzungen der S-Sensor als ausgefallen betrachtet werden.

Der Umfang der Plausibilisierung hängt von den bestehenden Sicherheitsanforderungen und der Vertrauenswürdigkeit des S-Sensors ab.

Für die Anwendung des Verfahrens ist es nicht notwendig, dass die Daten des Sensors S lückenlos nutzbar sind.

Weiter zeigt die Figur eine Basis-Ortungseinrichtung (die oben erwähnte erste Ortungseinrichtung), die im Fahrzeug angeordnet ist und mehrere Basissensoren B (kurz: die B-Sensoren oder Sensoren B) aufweist, hier die drei B-Sensoren BA, BB, Bn.

Bei dem B-Sensor BA handelt es sich um einen Wegimpulsgeber, der geschwindigkeitsproportionale Zählimpulse entsprechend der Umdrehung einer Fahrzeugachse ausgibt. Die B-Sensoren BB und Bn sind jeweils als Doppler-Radar ausgebildet und liefern zyklisch Daten in Abhängigkeit der aktuellen Fahrzeuggeschwindigkeit.

Die Ausgabe der Ortungsdaten der B-Sensoren erfolgt mit dem sensorspezifischen Abtastzyklus ΔtB (also ΔtBA, ΔtBB und ΔtBn für die jeweiligen B-Sensoren B1, B2, B3), der unabhängig von dem Abtastzyklus ΔtGPS des S-Sensors und der Zyklusdauer Δt ist.

Die von den Sensoren B mit der sensorspezifischen Zykluszeit ΔtB gelieferten Sensordaten (Weg-Sensordaten, Geschwindigkeits-Sensordaten) müssen zunächst, sofern sie als Geschwindigkeits-Sensordaten vorliegen, integriert werden, da die weitere Verarbeitung hier auf Weginformationen, d.h. wegproportionalen Sensordaten ~ΔsB±ε basiert (~ΔsBA±ε steht für den B-Sensor BA, ~ΔsBB±ε für den B-Sensor BB und ~ΔsBn±ε für den B-Sensor Bn). Das Zeichen ~ bezeichnet den Proportionalitätsfaktor und ε den enthaltenen Messfehler, beispielsweise infolge von mangelhafter Signalqualität.

Es ist nicht notwendig, dass die wegproportionalen Sensordaten ~ΔsB±ε der B-Sensoren lückenlos nutzbar sind. Zeitabschnitte, in denen die Sensordaten (Wegintervalle) ~ΔsB±ε der B-Sensoren nicht verfügbar, lückenhaft, qualitativ wechselhaft oder qualitativ minderwertig sind, werden nicht in die weitere Auswertung einbezogen. Dies gilt auch bei Fahrtrichtungsumkehr.

An diese Vorverarbeitung der Sensordaten der B-Sensoren schließt sich jeweils ein Varianzfilter V (V1, V2, V3 für die jeweiligen B-Sensoren B1, B2, B3) an, welche den stochastischen Messfehler der wegproportionalen Sensordaten ~ΔsB±ε reduzieren.

Die Filterung ist weiter verbunden mit einer Plausibilisierung. Dazu kann beispielsweise der zeitliche Verlauf der wegproportionalen Sensordaten ~ΔsB±ε analysiert werden und ein Vergleich mit der maximal möglichen Fahrzeugdynamik (Beschleunigen, Bremsen) erfolgen. Ein Bezug zu den wegproportionalen Sensordaten ~ΔsB±ε der anderen beiden B-Sensoren kann ebenfalls zur Plausibilisierung verwendet werden. Unplausible Sensordaten (Wegintervalle) ~ΔsB±ε werden in der nachfolgenden Verarbeitung nicht verwendet.

Die plausiblen fahrwegproportionalen Werte ~ΔsB werden an eine Kalibrierungsstufe K (K1, K2, K3 für die jeweiligen B-Sensoren B1, B2, B3) zur dynamischen Kalibrierung des zugehörigen B-Sensors übergeben, wobei die Kalibrierungsstufe K jeweils die innerhalb einer Zyklusdauer Δt liegenden plausiblen fahrwegproportionalen Werte ~ΔsB aufsummiert. An den Grenzen der Zyklusdauer Δt erfolgt bei Bedarf eine Interpolation der fahrwegproportionalen Werte ~ΔsB.

Bei Vorliegen verwendbarer Sensordaten ist für jede Zyklusdauer Δt ein mittels B-Sensor ermittelter fahrwegproportionaler Wert ~ΔsB und ein durch den S-Sensor gemessenes Fahrwegstück ΔsGPS verfügbar. Beginn und Ende der Aufzeichnung der Messwerte des B- und S-Sensors sind synchron für jedes Zeitintervall Δt. Aus dem Verhältnis des Fahrwegstückes ΔsGPS des S-Sensors zu dem fahrwegproportionalen Wert ~ΔsB des B-Sensors im gemeinsamen Zeitintervall Δt ergibt sich jeweils ein aktueller Quotient, der Verhältniswert kBΔt.

Das Verfahren ermittelt mit der Zyklusdauer Δt fortlaufend neue Verhältniswerte kBΔt (kBAΔt für den B-Sensor BA, kBBΔt für den B-Sensor BB, kBnΔt für den B-Sensor Bn).

Die Verhältniswerte kBΔt eines Sensors werden sensorspezifischen Klassen zugeteilt. Für das Dopplerradar können beispielsweise zwei Klassen definiert werden, die unterschiedlichen Betriebsmodi des Sensors (high quality, low quality) entsprechen. Je nachdem, in welchem Modus der Sensor aktuell arbeitet, werden die Verhältniswerte kBΔt der entsprechenden Klasse zugeteilt.

Jeder Verhältniswert kBΔt besitzt eine festgelegte Gültigkeitsdauer. Die Gültigkeitsdauer hängt von dem zeitlichen Verhalten des systematischen Messfehlers des zugehörigen B-Sensors ab. Indem veraltete Verhältniswerte kBΔt ungültig werden, können auch veränderliche systematische Messfehler des B-Sensors (z.B. Drift) korrigiert werden.

Für alle jeweils gültigen Verhältniswerte kBΔt einer Klasse erfolgt eine Mittelwertbildung. Die so berechneten Mittelwerte kB aller Klassen stellen die systemzustandabhängig anzuwendenden Kalibrierfaktoren für den B-Sensor dar. kBA stellt den Kalibrierfaktor für den Sensor A dar, kBB für den Sensor B usw.

Für alle Mittelwerte kB einer Klasse erfolgt auf der Basis der gültigen Verhältniswerte kBΔt weiter eine Varianzberechnung. Die Varianzen varB (also varBA, varBB, varBn) hängen von der Streuung der gültigen Verhältniswerte kBΔt ab.

Liegt für eine Zyklusdauer Δt kein plausibles und damit gültiges Fahrwegstück ΔsGPS eines S-Sensors und/oder kein wegproportionaler Wert ~ΔsB eines B-Sensors vor, erfolgt für diese Zyklusdauer Δt keine Berechnung eines Verhältniswerts kBΔt. Dennoch erfolgt in diesem Zyklus eine Neuberechnung der Mittelwerte kB aller Klassen und deren Varianzen varB, die sich gegebenenfalls durch Ungültigwerden veralteter Verhältniswerte kBΔt verändern.

Mit dem zuletzt ermittelten Mittelwert kB der aktuell anzuwendenden Klasse werden alle nachfolgend gelieferten wegproportionalen Werte ~ΔsB eines B-Sensors kalibriert (multipliziert) und bilden damit die Wegintervalle ΔsB.

ΔsB ist das jeweils in dem sensorspezifischen Abtastzyklus ΔtB zurückgelegte Wegintervall, ΔsBA das des B-Sensors BA in dem Abtastzyklus ΔtBA, und so weiter.

Die kalibrierten Wegintervalle ΔsB (ΔsBA, ΔsBB, ΔsBn) werden dann an eine Fusionsstufe F1 übergeben. Außerdem erhält die Fusionsstufe F1 die ermittelten aktuellen Varianzen varB.

Die Fusionsstufe F1 bildet zyklisch aus den erzeugten kalibrierten Wegintervallen ΔsBA, ΔsBB, ΔsBn der B-Sensoren ein fusioniertes Wegintervall Δs (oder den Fahrweg Δs). Die Wegintervalle ΔsBA, ΔsBB, ΔsBn gehen dabei in das Wegintervall Δs gewichtet ein; das Wegintervall Δs ist quasi das gewichtete Mittel aus den kalibrierten Fahrwegen ΔsBA, ΔsBB, ΔsBn. Das Gewicht wird jeweils durch die sensorspezifische Varianz (Kalibrierungsvarianz) varB gebildet. Umso größer die Varianz varB eines B-Sensors im Verhältnis zu den Varianzen varB der anderen B-Sensoren ist, umso geringer ist sein Anteil am fusionierten Wegintervall Δs.

Das Wegintervall Δsₚ entspricht dem fusionierten Wegintervall Δs und wird an die Plausibilisierungsstufe R2 ausgegeben, wenn aus den Varianzen var_{B} der B-Sensoren erkennbar ist, dass die Genauigkeit der Ortung eine festzulegende Mindestgrenze überschritten hat. Das in diesem Fall ausgegebene Wegintervall Δsₚ bildet ein Prüfkriterium für die Plausibilisierung der Daten der S-Sensoren.

Eine wesentliche Aufgabe der Fusionsstufe F1 ist außerdem die sensorübergreifende Plausibilisierung der Wegintervalle ΔsB, die dabei analysiert und bewertet werden. Folgende Plausibilisierungen sind vorgesehen:
1. Vergleich der B-Sensoren: Bei drei oder mehr B-Sensoren können fehlerhafte Wegintervalle ΔsB mittels Mehrheitsentscheid offenbart und von der Fusion suspendiert werden. Es können Kriterien für die teilweise, zeitweise oder völlige Suspension der B-Sensoren verwaltet und überprüft werden. B-Sensoren, die nach temporärem Ausfall erneut plausible Werte liefern, können nach entsprechender Plausibilisierung und Vertrauensbildung wieder in die Fusion aufgenommen werden.
2. statische Prüfung: Es werden statische Grenzwerte der dynamischen Kalibrierungsfaktoren der B-Sensoren überprüft. Die statischen Grenzwerte sind festzulegende sensorspezifische maximale Kalibrierungsgrenzen, innerhalb derer ein B-Sensor arbeiten darf. Die Prüfung hat folgende Konsequenzen bei Misserfolg: A) Bei Verstoß eines B-Sensors gegen seine statischen Grenzwerte werden dessen Fahrwege ΔsB von der Fusion suspendiert. B) Im Falle der Verwendung von 2 oder mehr B-Sensoren müssen mindestens 2 B-Sensoren korrekt innerhalb ihrer statischen Grenzwerte arbeiten. Andernfalls werden die Mittelwerte kB aller B-Sensoren zurückgesetzt.
3. Prüfung Gleichlaufdrift: Driften die Wegintervalle ΔsB von mehreren B-Sensoren zugleich über einen festzulegenden Zeitraum in die gleiche Richtung (Gleichlaufdrift), kann daraus auf einen systematischen Fehler des S-Sensors geschlossen werden. Werden bei der Überprüfung festgelegte Grenzen der Gleichlaufdrift überschritten, erfolgt das Rücksetzen der Mittelwerte kB aller B-Sensoren (die Driftursache liegt dann mit hoher Wahrscheinlichkeit beim S-Sensor).
4. Prüfung von Kumulanten höherer Ordnung: Für die Plausibilisierung können neben den Wegmessungen der B-Sensoren auch die von den Mittelwerten kB gelieferten Varianzen varB genutzt werden. Anhand der Varianz varB kann sowohl die Konvergenz des Kalibrierverfahrens, als auch die Genauigkeit der Wegintervalle ΔsB der B-Sensoren beurteilt werden. Durch die Prüfung von Kumulanten höherer Ordnung der Varianz varB kann die Form der Verteilungsfunktion beurteilt werden, wodurch Rückschlüsse auf anteilige systematische und stochastische Fehler und deren Entwicklung möglich sind. Werden festgelegte Grenzwerte überschritten, sind dies Indizien für gestörte B-Sensoren. Beurteilt werden können die sensorspezifischen Kumulanten 3. Ordnung (Symmetriekumulante) und 4. Ordnung (Grad der Abweichung zur Gaußverteilung) anhand von dafür festzulegenden Grenzwerten. Die Prüfung hat folgende Konsequenzen bei Misserfolg: A) Bei Verstoß der Kumulante 3. oder 4. Ordnung eines B-Sensors gegen die Grenzwerte wird dieser Sensor von der Fusion suspendiert. B) Verstoßen im Falle der Verwendung von 2 oder mehr Sensoren mindestens zwei Kumulanten gleicher Ordnung gegen ihre Grenzwerte, werden die Mittelwerte kB aller B-Sensoren zurückgesetzt.

Der Umfang der sensorübergreifenden Plausibilisierung ist skalierbar und hängt neben der Anzahl der B-Sensoren hauptsächlich von den Sicherheitsanforderungen der Ortung ab.

Durch die Plausibilisierung entstehen differenzierte Diagnoseaussagen bezüglich des dynamischen Verhaltens der B- und S-Sensoren.

Für die Fusion werden nur die plausiblen Wegintervalle ΔsB der B-Sensoren verwendet.

Das Fusionsergebnis, das Wegintervall Δs, wird zyklisch an eine übergeordnete Applikation AP übergeben, die daraus jeweils ausgehend von einem definierten Ausgangspunkt den Fahrweg des Fahrzeugs durch Aufsummierung der Wegintervalle Δs berechnet.

Mit den von den Kalibrierungsstufen K gelieferten Varianzen varB der Kalibrierung erfolgt in einer Fusionsstufe F2 deren sensorübergreifende Fusion. Dafür sind verschiedene Verfahren möglich. Beispielsweise kann das Fusionsergebnis durch Faltung der sensorspezifischen Verteilungsdichtefunktionen ermittelt werden. Die Varianz varB wird als statistische Größe an die übergeordnete Applikation AP ausgegeben.

Die Varianz varB ist ein aktuelles Maß für die Streuung der Wegintervalle Δs. Daraus kann unter Bezug auf eine Wahrscheinlichkeitsverteilung abgeleitet werden, mit welcher Wahrscheinlichkeit sich der wahre Ort des Fahrzeugs um den Mittelwert, also das Wegintervall Δs des Fahrzeugs, verteilt. Die Wahrscheinlichkeitsverteilung ist zugleich Basis für die Bildung eines Vertrauensintervalls des Wegintervalls Δs. Je nach Sicherheitsanforderung kann für jeden ermittelten Fahrweg Δs als Vertrauensintervall ein Toleranzbereich (Δs_{MIN}, Δs_{MAX}) angegeben werden, in dem das Fahrzeug sich mit einer geforderten Aufenthaltswahrscheinlichkeit befindet.

Das beschriebene Verfahren kann im einfachsten Falle grundsätzlich auch mit einem einzigen B-Sensor betrieben werden, nur dass dann keine gewichtete Mittelung mit den damit verbundenen Vorteilen möglich ist.

Das Verfahren zur Bestimmung des Fahrwegs eines Fahrzeugs mit Stützung durch ein satellitengestütztes Navigationssystem lässt sich analog auch zur Bestimmung der Geschwindigkeit des Fahrzeugs anwenden.

## Patentansprüche

1. Verfahren zur Bestimmung des Fahrwegs (Δs) und/oder der Geschwindigkeit eines Fahrzeugs, insbesondere für sicherheitskritische Zugbeeinflussungssysteme,
anhand von zyklisch erfassten Weg-Sensordaten (~ΔsB±ε) und/oder Geschwindigkeits-Sensordaten einer im Fahrzeug angeordneten ersten Ortungseinrichtung (1), insbesondere mittels Wegimpulsgeber (BA) und/oder Doppler-Radar (BB, Bn) als WegSensor bzw. Geschwindigkeits-Sensor,
**dadurch gekennzeichnet,**
**dass** zyklisch aus den Weg-Sensordaten (~ΔsB±ε) und/oder Geschwindigkeits-Sensordaten der ersten Ortungseinrichtung (1) geschwindigkeits- und/oder fahrwegproportionale Werte (~ΔsB) gebildet werden,
**dass** im Fahrzeug eine zweite Ortungseinrichtung (2) vorgesehen ist, welche Signale eines satellitengestützten Navigationssystems empfängt, zyklisch den jeweils aktuellen Ort (POSGPS) und/oder die Geschwindigkeit des Fahrzeugs ermittelt und anhand der ermittelten Orte (POSGPS) und/oder Geschwindigkeiten den Fahrweg (ΔsGPS) und/oder die Durchschnittsgeschwindigkeit innerhalb der Zyklusdauer bestimmt,
**dass** der mittels der zweiten Ortungseinrichtung (2) bestimmte Fahrweg (ΔsGPS)/die bestimmte Durchschnittsgeschwindigkeit zyklisch mit dem fahrwegproportionalen (~ΔsB)/geschwindigkeitsproportionalen Wert der ersten Ortungseinrichtung (1) ins Verhältnis gesetzt und als Ergebnis ein Verhältniswert (kBΔt) gebildet wird,
**dass** jeweils aus mehreren zeitlich hintereinander liegenden Verhältniswerten (kBΔt) Mittelwerte berechnet werden und
**dass** der Fahrweg (Δs) bzw. die Geschwindigkeit des Fahrzeugs jeweils durch Multiplikation des fahrwegproportionalen Werts (~ΔsB) bzw. des geschwindigkeitsproportionalen Werts mit dem zugehörigen Mittelwert berechnet wird.

2. Verfahren nach Anspruch 1,
**dadurch gekennzeichnet,**
**dass** die Verhältniswerte (kBΔt) abhängig von Systemzuständen, beispielsweise von dem Betriebszustand eines Sensors, einer oder mehreren Klassen zugeordnet werden,
**dass** aus mehreren zeitlich hintereinander liegenden Verhältniswerten (kBΔt) jeder Klasse Mittelwerte berechnet werden und
**dass** der Fahrweg (Δs) bzw. die Geschwindigkeit des Fahrzeugs jeweils durch Multiplikation des fahrwegproportionalen Werts (~ΔsB) bzw. des geschwindigkeitsproportionalen Werts mit dem Mittelwert der systemzustandsabhängig anzuwendenden Klasse berechnet wird.

3. Verfahren nach Anspruch 1 oder 2,
**dadurch gekennzeichnet,**
**dass** die erste Ortungseinrichtung (1) mehrere Sensoren (B) umfasst, die jeweils Weg-Sensordaten (~ΔsB±ε) und/oder Geschwindigkeits-Sensordaten des Fahrzeugs unabhängig voneinander erfassen,
**dass** durch Verarbeitung der Sensordaten (~ΔsB±ε), beispielsweise durch Kompensation nichtlinearen Sensorverhaltens, und bezogen auf die Zyklusdauer Δt fahrwegproportionale (~ΔsBA, ~ΔsBB, ~ΔsBn) und/oder geschwindigkeitsproportionale Werte gebildet werden,
**dass** der mittels der zweiten Ortungseinrichtung (2) bestimmten Fahrweg (ΔsGPS) und/oder die bestimmte Durchschnittsgeschwindigkeit innerhalb der Zyklusdauer jeweils mit jedem der fahrwegproportionalen (~ΔsBA, ~ΔsBB, ~ΔsBn) und/oder geschwindigkeitsproportionalen Werte der ersten Ortungseinrichtung (1) ins Verhältnis gesetzt und als Ergebnis je ein Verhältniswert (kBAΔt, kBBΔt, kBnΔt) gebildet wird,
**dass** für jeden Sensor (B) Mittelwerte (kBA, kBB, kBn) durch Mittelung der jeweils gültigen Verhältniswerte (kBAΔt, kBBΔt, kBnΔt) gebildet werden,
**dass** alle fahrwegproportionalen (~ΔsBA, ~ΔsBB, ~ΔsBn) und/oder geschwindigkeitsproportionalen Werte der ersten Ortungseinrichtung (1) jeweils mit dem zuletzt ermittelten zugehörigen Mittelwert (kBA, kBB, kBn) multipliziert werden und
**dass** ein gewichtetes Mittel aus diesen kalibrierten Fahrwegen (ΔsBA, ΔsBB, ΔsBn) und/oder Geschwindigkeiten gebildet wird,
wobei die Gewichtsfaktoren aus den Varianzen (varBA, varBB, varBn) der Mittelwerte (kBA, kBB, kBn) abgeleitet werden.

4. Verfahren nach einem der Ansprüche 1 - 3,
**dadurch gekennzeichnet,**
**dass** die Verhältniswerte (kBAΔt, kBBΔt, kBnΔt) abhängig von Systemzuständen, beispielsweise von dem Betriebszustand eines Sensors, einer oder mehreren Klassen zugeordnet werden,
**dass** für jede Klasse jedes Sensors Mittelwerte (kBA, kBB, kBn) durch Mittelung der gültigen Verhältniswerte (kBAΔt, kBBΔt, kBnΔt) einer Klasse gebildet werden,
**dass** alle fahrwegproportionalen (~ΔsBA, ~ΔsBB, ~ΔsBn) und/oder geschwindigkeitsproportionalen Werte der ersten Ortungseinrichtung (1) jeweils mit dem zuletzt ermittelten zugehörigen Mittelwert (kBA, kBB, kBn) der systemzustandsabhängig zu verwendenden Klasse multipliziert werden und
**dass** ein gewichtetes Mittel aus diesen kalibrierten Fahrwegen (ΔsBA, ΔsBB, ΔsBn) und/oder Geschwindigkeiten gebildet wird,
wobei die Gewichtsfaktoren aus den Varianzen (varBA, varBB, varBn) der Mittelwerte (kBA, kBB, kBn) der systemzustandsabhängig zu verwendenden Klasse abgeleitet werden.

5. Verfahren nach einem der Ansprüche 1 - 4,
**dadurch gekennzeichnet,**
**dass** das ins Verhältnissetzen durch Division der ermittelten Fahrwege oder Geschwindigkeiten der zweiten Ortungseinrichtung (2) durch die fahrwegproportionalen bzw. geschwindigkeitsproportionalen Werte der ersten Ortungseinrichtung (1) erfolgt.

6. Verfahren nach einem der Ansprüche 1 - 5,
**dadurch gekennzeichnet,**
**dass** die Gewichtsfaktoren für eine Fusion der Mittelwerte jeweils indirekt proportional zur Varianz (varBA, varBB, varBn) der Mittelwerte (kBA, kBB, kBn) sind.

7. Verfahren nach Anspruch 6,
**dadurch gekennzeichnet,**
**dass** aus den einzelnen Varianzen (varBA, varBB, varBn) der aktuellen Mittelwerte (kBA, kBB, kBn) eine resultierende Varianz als Maß für die Streuung der kalibrierten Fahrwege (ΔsBA, ΔsBB, ΔsBn) und/oder Geschwindigkeiten und/oder als Hilfsgröße zur Bestimmung des Vertrauensintervalls des gemittelten Fahrwegs (Δs)/der gemittelten Geschwindigkeit gebildet wird.

8. Verfahren nach Anspruch 7,
**dadurch gekennzeichnet,**
**dass** die resultierende Varianz mathematisch durch Faltung gebildet wird.

9. Verfahren nach einem der Ansprüche 1 - 8,
**dadurch gekennzeichnet,**
**dass** Plausibilitätsprüfungen der Sensordaten und der kalibrierten Fahrwege (Δs) und/oder Geschwindigkeiten vorgesehen sind, wobei bei Vorliegen einer Nichtplausibilität während einer Zyklusdauer Δt kein neuer Verhältniswert (kBΔt) gebildet wird, wodurch als Folge die Konvergenz des Verfahrens für die Zyklusdauer Δt unterbrochen wird.

10. Verfahren nach einem der Ansprüche 1 - 9,
**dadurch gekennzeichnet,**
**dass** für jeden Verhältniswert (kBΔt) eine Gültigkeitsdauer vorgegeben ist, nach deren Ablauf der Verhältniswert (kBΔt) nicht mehr für die Berechnung der Mittelwerte (kB) verwendet wird, wodurch das Verfahren in Zeitabschnitten ohne neue Verhältniswerte (kBΔt) allerdings divergiert.
